# EUROPEAN PATENT SPECIFICATION

(11) **EP 3 238 585 B1**
(45) Date of publication and mention of the grant of the patent: **18.12.2019**
(21) Application number: 17165802.4
(22) Date of filing: 10.04.2017
(51) Int. Cl.: A47J 43/26

(54) **MANUAL PERCUSSION-OPERATED TABLE-TOP DEVICE TO CRACK THE SHELLS OF WALNUTS, HAZELNUTS, ALMONDS AND SIMILAR**
MANUELLE SCHLAGBETRIEBENE TISCHVORRICHTUNG ZUM BRECHEN DER SCHALEN VON WALNÜSSEN, HASELNÜSSEN, MANDELN UND DERGLEICHEN
DISPOSITIF DE PLATEAU DE TABLE ACTIONNÉ PAR PERCUSSION MANUELLE POUR CASSER LES COQUES DE NOIX, NOISETTES, AMANDES ET SIMILAIRES

(30) Priority: 12.04.2016 IT UA20162506
(43) Date of publication of application: 01.11.2017
(73) Proprietor: TECNOVA di Ciccarello Spitaleri Angelo, 16153 Genova Sestri (IT)
(72) Inventor: CICCARELLO SPITALERI, Angelo, I-16153 GENOVA (IT)
(74) Representative: Porsia, Attilio

(56) References cited:
- CN-Y- 201 393 533
- FR-A1- 2 067 178
- US-A- 1 044 448
- US-A- 1 052 926

## Description

The present invention concerns a manual percussion-operated table-top device to crack walnuts, hazelnuts, almonds or similar edible seeds. For the sake of convenience, the term "nut" will be used in the following description to indicate any type of edible seed protected by a shell.

In particular, the device according to the invention is of the type comprising a base acting as an anvil to be rested on a surface, provided with one or more cavities for housing a nut to be cracked and in which the breaking force is applied on the nut shell by means of a hammer element integral with the lower end of a plunger guided in its movement with respect to the anvil, said hammer element being returned by a spring to the raised rest position.

The patents US 1 044 448, US 1 412 249 and US 2 656 866 are cited as known art, all entitled "Nutcracker", in which the nut to be cracked is housed inside a chamber adapted to contain the fragments of the broken shell of the nut, to prevent part of these fragments scattering and being projected dangerously into the surrounding environment.

CN 201 393 533 Y discloses a chestnut slitter with a design similar to that of the present nutcracker.

These known devices are complex in construction terms and some risk jamming during operation due to particles of the shell becoming accidentally lodged between the relatively mobile parts of said devices. These known devices do not have several compartments with different shapes and sizes for better containment and better crackability of the shells of seeds having different qualities and sizes, they are not designed to avoid excessive or abnormal crushing of the seed during cracking of the shell and they are not designed to allow rapid access to the seed immediately after each shell cracking operation.

The aim of the invention is to overcome all these and other limits of the known art, with a device as in claim 1) and the subsequent dependent claims, which exploits the following solution. The device comprises a dome-like structure, made of metal or transparent or coloured plastic, with diameter such as to circumscribe a nut to be cracked and height such as to contain, with clearance above the nut to be cracked, a hammer element integral with the lower end of a plunger which passes through a central hole in the vault of said dome; the section of said plunger emerging from said hole is provided at the top end with a knob, said plunger being pushed upwards by a cylindrical helical spring coaxial with said plunger, located between the dome and the knob; said dome is positioned on a base provided with at least one cavity for partial containment of a nut to be cracked, the dome subsequently being rested on said base so as to circumscribe the nut and position above the latter the hammer element which is then pressed down sharply onto the nut by the user's hand acting on the knob of the plunger, so as to crack the shell of the nut below, the containing action of the dome preventing particles of shell scattering into the surrounding environment. After said cracking or shattering phase, by simply raising the dome by means of the upper knob of the plunger, the user will have immediate access to the seed and can clean the compartment in the base ready for the next operation with the greatest of ease.

Further characteristics of the invention and the advantages resulting therefrom will be made clearer by the following description with reference to the figures of the accompanying drawings in which:
- fig. 1 illustrates the device in longitudinal section and in the position of use;
- fig. 2 illustrates details of the device according to the cross section line II-II of figure 1;
- fig. 3 illustrates with parts in section as in figure 1 a slight construction variation which allows adjustment of the hammer element stroke to adapt it to the different types and sizes of seeds with shell, to prevent damaging said seeds;
- fig. 4 illustrates in perspective a slight variation of the base with the compartments for partial containment of different types of seeds with shell;
- fig. 5 illustrates a variation of the device according to the invention, and
- figure 6 illustrates a further working variation of the device according to the invention.

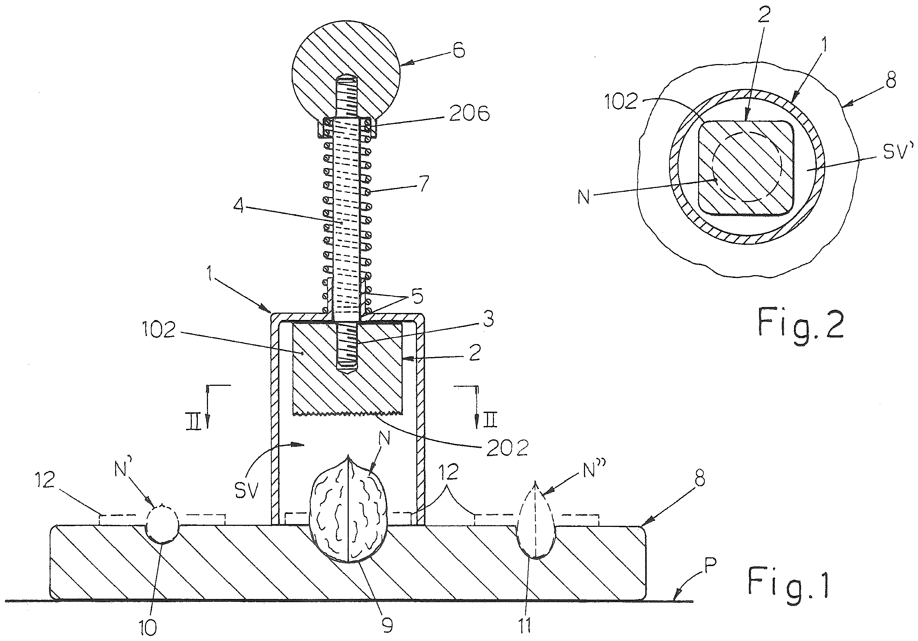

With reference firstly to figures 1 to 3, the device comprises a dome-like structure 1. The dome 1 can be made of metal or another suitable material, including opaque or transparent plastic. According to the invention it is made of transparent material, so that it is possible to monitor the nut cracking operation (walnut, almond, hazelnut or similar). The dome 1 has a cylindrical shape, with a round section, with a diameter such as to circumscribe with sufficient clearance a nut N and high enough to contain, above said nut, a sufficient empty space SV and a hammer element 2 above for cracking the shell of the nut N.

According to a first embodiment of the invention illustrated in figures 1 to 3, the hammer element 2 is preferably made in the form of a stainless steel cube with sufficiently rounded corners 102 while its lower face 202 can be sufficiently roughened by small pittings or cross scorings, like knurling. It is understood that instead of stainless steel, any other suitable material can be used for construction of the hammer element 2, on condition that the latter always has a significant weight suitable for the intended purpose.

From figure 2 it can be seen that the diagonal of the square shape of the hammer element 2 is preferably smaller than the internal diameter of the dome 1, so that between the parts 1 and 2 there is an empty space SV' with a diversified plan shape and such as to prevent jamming of the hammer element 2 due to small portions of shell of the nut N becoming accidentally lodged between the moving parts 1 and 2, as could happen for example if the hammer element 2 was cylindrical.

The hammer element 2 is provided at the top and in the centre with a perpendicular seat 3 for screw-fixing the lower end of a plunger 4 which passes slidingly through a hole and if necessary a small guide bush 5 above, on the upper wall of the dome 1. The bush 5 can be obtained in one piece with the dome 1 or inserted on it.

The plunger 4 has a length for example approximately equal to or slightly longer than the height of the dome 1 and its upper end is screw-fixed or fixed in another way to a spherical knob 6 which the user strikes with the palm of his/her hand during the cracking operation.

In the outer part of the dome 1, the plunger 4 is surrounded coaxially by a cylindrical helical counter spring 7 which interacts between the cup-shaped bottom 206 of the knob 6 or an inserted cup and the guide bush 5 of the top of said dome 1 and has characteristics such as to maintain said plunger 4 always in an extended position and maintain the hammer element 2 resting against the upper wall of the dome 1.

The device according to the invention is completed by a base 8 made of wood or other suitable material, including plastic, provided with at least one or more cavities 9 having shape and size suitable for partially containing and correctly positioning a nut N, and preferably provided with additional cavities 10, 11 and if necessary others, having shape and size suitable for partially containing and correctly positioning a hazelnut N' or an almond N" or other seed with shell.

Around the cavities 9, 10, 11 the base 8 can be provided with an imprint 12 indicated by a broken line in figure 1, in relief or recessed, or simply drawn and useful for centring the mouth of the dome 1 and consequently for correctly arranging and centring the hammer element 2 on the nut to be cracked.

Operation of the device as described is simple and obvious.

The base 8 is rested on a sufficiently stable strong surface P, for example on a table top, then the user places the nut N or other fruit with shell (N', N") in the dedicated cavity 9 (10, 11), positions the dome 1 over the nut, gripping it by the knob 6 and centring it with the lower part on the imprint 12, after which, with the palm of his/her hand, the user gives the knob 6 a sharp downward blow, with sufficient force to ensure that the hammer element 2 cracks the shell of the nut N which remains in the cavity 9; due to said cavity and to its partial containment of the nut, damage is prevented to the inner kernel by fragments of the shell cracked by said hammer element 2.

Obviously the fragments of shell resulting from cracking of the nut remain enclosed within the dome 1. If the dome 1 is made of transparent material, in accordance with a preferred embodiment of the present invention, the effects of cracking of the shell can be seen through the dome, the thrust on the hammer element 2 can be adjusted and if necessary the operation of said hammer element repeated on the same nut if its shell is particularly tough and is not satisfactorily cracked at the first blow.

When the knob 6 is released, the counter spring 7 automatically returns the hammer element 2 to the upper rest position, so that the user can raise the dome 1 by means of the knob 6 and can immediately access the cracked nut to remove it from the cavity 9, clean the cavity and place another nut inside to be cracked.

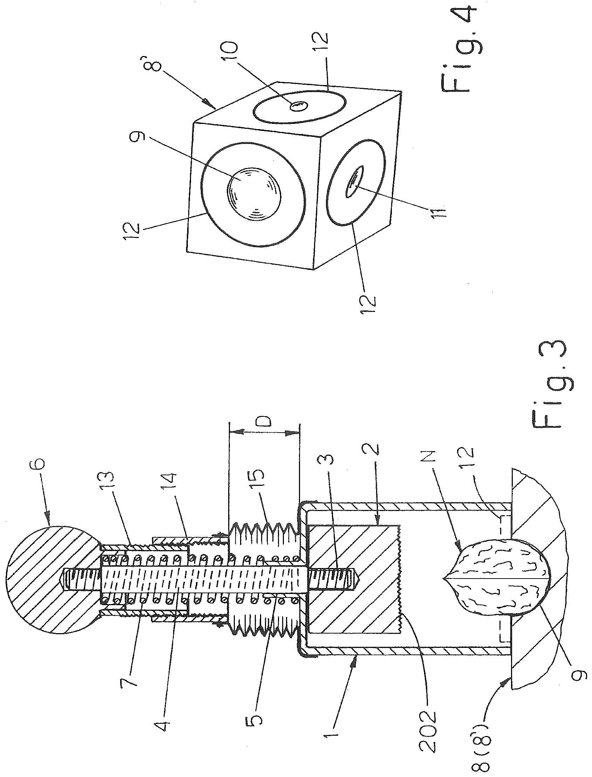

The device described can be provided with end stroke means, adjustable if necessary, associated with the base 8 and/or with the relatively mobile parts of said device, to limit to pre-set values the downward stroke of the hammer element 2, to adapt it to the different requirements of the seeds N, N', N" to be cracked, independently of the downward thrust force exerted on the knob 6, in order to prevent crushing of the seed released from the shell. These means, as illustrated in figure 3, can for example consist of at least two small tubes 13, 14 telescopically screwed onto each other as illustrated in figure 3, which partly surround the spring 7 also with a safety function and which interact between the top of the dome 1 and the lower part of the knob 6; the upper tube 13 can if necessary be integral with said lower part of the knob 6 or fixed to it. By screwing or unscrewing the tube 14 onto the tube 13, the distance D between the lower end of said tube 14 and the upper wall of the dome 1 is varied and therefore the downward stroke of the assembly consisting of the knob 6, plunger 4 and hammer element 2 is varied. The otherwise exposed section of the counter spring 7 between the lower end of the tube 14 and the top of the dome 1 can if necessary be protected by a bellows 15 or by a small tube, not illustrated, which runs telescopically on the outer tube 14.

According to another slight variation, which also falls within the scope of the invention and is illustrated in figure 4, the base 8 can be replaced by a less cumbersome cube structure 8' made of wood or other material, on each face of which a cavity 9, 10, 11 is obtained and if necessary an imprint 12 to be aligned in a removable manner with the mouth of the dome 1.

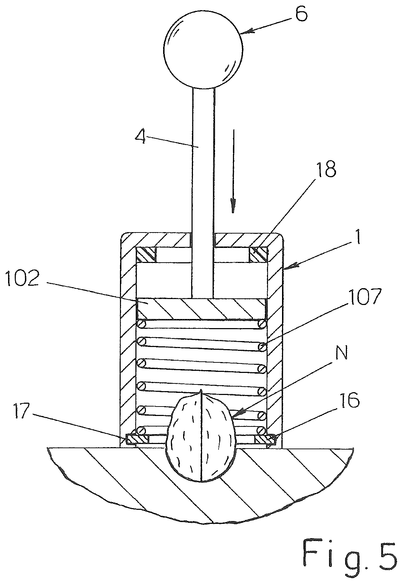

In the embodiment illustrated in figure 5 the cylindrical helical spring 107 adheres to the inner casing of the dome 1 and is located between the bottom of the hammer element 102, which in this case consists of a disc element having external diameter equal, with a small radial clearance, to the internal diameter of the dome 1, and a stop element consisting of a split ring 16 partially fitted in an annular groove 17 provided on the inner wall of the dome 1, near its mouth. On the end of the dome 1 a ring is applied, made of Teflon or analogous material, 18 to absorb the impact of the hammer element 102 against the end of the dome 1.

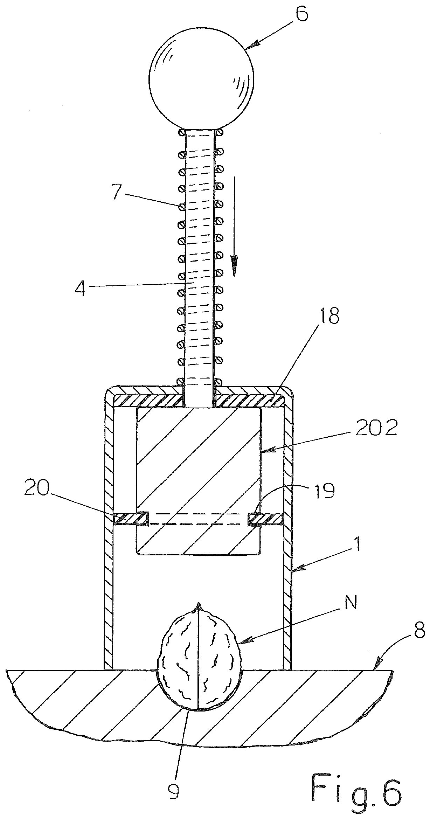

Lastly, in the embodiment of the device according to the invention illustrated in figure 6, the hammer element 202 consists of a steel cylinder having diameter smaller than the internal diameter of the dome 1. Said cylinder 202 is provided, in an intermediate area thereof, with an annular groove 19.

The number 20 illustrates an annular element made of semi-rigid plastic, such as Teflon or similar, having an external diameter equal to the internal diameter of the dome 1, and having an internal diameter equal to that of the groove 19, so that the internal perimeter of the ring 20 is embedded in the groove 19, thus acting both as centring element for the hammer element 202 and as an element to prevent the fragments of shell becoming lodged behind the hammer element 202.

Naturally the present invention is not limited to the embodiments illustrated and described, but includes all the variations and modifications falling within the scope of the inventive concept, substantially as illustrated, described and claimed in the attached claims.

Lastly, to absorb the impact of the palm of the hand with the knob 6, it has proved useful to hold a sphere of elastic material like rubber or similar in the palm of the hand.

## Claims

1. A table-top device to crack the shells of walnuts, hazelnuts, almonds or similar (N, N', N"), comprising a dome (1) having diameter such as to circumscribe a nut (N, N', N") to be cracked and height such as to contain above the nut to be cracked a hammer element (2, 102, 202) integral with the lower end of a plunger (4) which passes through a central hole (5) of the vault of said dome to emerge from the latter with a section provided at the upper end with a knob (6); **characterized by** the fact that said dome (1) has a cylindrical shape with round section and is made of transparent material and that said plunger (4) is pushed upwards by a cylindrical helical spring (7, 107).

2. The table-top device according to claim 1, comprising a base (8) where said dome is positioned on, wherein said base (8) is provided with at least one cavity (9) to partially contain a nut (N, N', N") to be cracked.

3. The device according to claim 1), wherein the cylindrical helical spring (7) coaxially surrounds the plunger (4) and is located between the end of the dome 1 and the knob (6).

4. The device according to claim 1 wherein the cylindrical helical spring (107) adheres to the inner casing of the dome 1 and is located between the end of the hammer element (102) and a stop element (16) positioned at the mouth of the dome (1) consisting of a split ring (16) partially fitted in an annular groove (17) made on the inner wall of the dome 1, in the vicinity of the mouth thereof.

5. The device according to claim 1), wherein the hammer element (2) has a prismatic shape, preferably a substantially cubic shape and dimensions such as to be housed with sufficient radial clearance (SV') inside said dome (1).

6. The device according to claim 3), wherein the hammer element (102) has a disc shape with diameter equal to the internal diameter of the dome 1.

7. The device according to claim 1) wherein the hammer element (202) consists of a steel cylinder having diameter smaller than the internal diameter of the dome (1) provided in an intermediate area thereof with an annular groove (19) for housing the inner edge of an annular centring disc (20) having external diameter equal to the internal diameter of the dome (1).

8. The device according to any one of the preceding claims from 1 to 6, wherein the hammer element (2, 102, 202) is made of stainless steel and has a significant weight.

9. The device according to any one of the preceding claims from 1 to 7, wherein the lower face (102) of the hammer element (2, 102, 202) is rough.

10. The device according to claim 2), wherein the base or anvil (8) is formed of a board made of wood or other appropriate material, including plastic, provided with at least one cavity (9) having shape and dimensions suitable for partly housing and correctly positioning upright a walnut (N) and provided with additional cavities (10, 11) having shape and dimensions suitable for housing partly and correctly positioning upright a hazelnut (N') or an almond (N") or other.

## Patentansprüche

1. Eine Tischvorrichtung zum Knacken der Schalen von Walnüssen, Haselnüssen, Mandeln oder dergleichen (N, N', N"), welche eine Kuppel (1) umfasst, die einen Durchmesser aufweist, der so beschaffen ist, dass er eine zu knackende Nuss (N, N', N") umschließt, und eine Höhe, die so beschaffen ist, dass sie oberhalb der zu knackenden Nuss ein Hammerelement (2, 102, 202) umfasst, welches einteilig mit dem unteren Ende eines Stößels (4) ist, der durch eine entsprechende mittlere Öffnung (5) der Wölbung der genannten Kuppel hindurch führt, um aus der letzteren hervorzutreten, mit einem Abschnitt, welcher jeweils am oberen Ende mit einem Griff (6) versehen ist; **dadurch gekennzeichnet, dass** die genannte Kuppel (1) eine zylindrische Form mit rundem Querschnitt aufweist und aus transparentem Material ist, sowie dadurch, dass der genannte Stößel (4) durch eine zylindrische Schraubenfeder (7, 107) nach oben gestoßen wird.

2. Die Tischvorrichtung gemäß Anspruch 1, welche eine Basis (8) umfasst, auf der die genannte Kuppel angeordnet ist, wobei die genannte Basis mit mindestens einem Hohlraum (9) zur teilweisen Aufnahme einer Nuss (N, N', N") ausgerüstet ist, die geknackt werden soll.

3. Die Vorrichtung gemäß Anspruch 1, wobei die zylindrische Schraubenfeder (7) koaxial den Stößel (4) umschließt und sich zwischen dem Ende der Kuppel (1) und dem Griff (6) befindet.

4. Die Vorrichtung gemäß Anspruch 1, wobei die zylindrische Schraubenfeder (107) am inneren Gehäuse der Kuppel (1) anliegt und zwischen dem Ende des Hammerelements (102) und einem Arretierelement (16) angeordnet ist, welches sich an der Öffnung der Kuppel (1) befindet und aus einem Spaltring (16) besteht, welcher teilweise in eine ringförmige Rille (17) eingeschoben ist, die sich an der inneren Wand der Kuppel (1) befindet, und zwar in der Nähe von deren Öffnung.

5. Die Vorrichtung gemäß Anspruch 1, wobei das Hammerelement (2) eine prismatische Form aufweist, und zwar vorzugsweise eine im wesentlichen kubische Form, sowie Abmessungen, die so beschaffen sind, dass sie mit ausreichendem radialen Freiraum (SV') in der genannten Kuppel (1) untergebracht werden können.

6. Die Vorrichtung gemäß Anspruch 3, wobei das Hammerelement (102) eine Scheibenform mit einem Durchmesser aufweist, der dem Innendurchmesser der Kuppel (1) entspricht.

7. Die Vorrichtung gemäß Anspruch 1), wobei das Hammerelement (202) aus einem Stahlzylinder besteht, welcher einen Durchmesser aufweist, der geringer als der Innendurchmesser der Kuppel (1) ist und der in deren Zwischenbereich mit einer ringförmigen Rille (19) zur Unterbringung der inneren Kante einer ringförmigen Zentrierscheibe (20) ausgerüstet ist, deren Aussendurchmesser dem Innendurchmesser der Kuppel (1) entspricht.

8. Die Vorrichtung gemäß einem beliebigen der vorausgegangenen Ansprüche von 1 bis 6, wobei das Hammerelement (2, 102, 202) aus rostfreiem Stahl besteht und ein beträchtliches Gewicht aufweist.

9. Die Vorrichtung gemäß einem beliebigen der Ansprüche von 1 bis 7, wobei die untere Oberfläche (102) des Hammerelements (2, 102, 202) rau ist.

10. Die Vorrichtung gemäß Anspruch 2), wobei die Basis oder der Amboss (8) aus einem Brett aus Holz oder einem anderen geeigneten Material, einschließlich Kunststoff, gebildet wird, das mit mindestens einem Hohlraum (9) versehen ist, welcher die Form und die Ausmaße aufweist, die zur teilweisen Aufnahme und korrekten aufrechten Stellung einer Walnuss (N) geeignet und mit zusätzlichen Hohlräumen (10, 11) ausgerüstet sind, die die Form und die Ausmaße aufweisen, welche zur teilweisen Aufnahme und korrekten aufrechten Stellung (N') einer Haselnuss oder einer Mandel (N") oder dergleichen geeignet sind.

## Revendications

1. Dispositif de plateau de table pour casser les coques de noix, noisettes, amandes ou similaires (N, N', N"), comprenant un dôme (1) ayant un diamètre tel qu'il encercle un fruit à coque (N, N', N") à casser et ayant une hauteur telle qu'il contient au-dessus du fruit à coque à casser un élément en marteau (2, 102, 202) solidaire de l'extrémité inférieure d'un piston (4) qui passe à travers un trou central (5) de la voute dudit dôme pour émerger de ce dernier avec une section prévue à l'extrémité supérieure avec un bouton (6) ; **caractérisé en ce que** ledit dôme (1) a une forme cylindrique avec une section ronde et est constitué de matériel transparent et **en ce que** ledit piston (4) est poussé vers le haut par un ressort hélicoïdal cylindrique (7, 107).

2. Dispositif de plateau de table selon la revendication 1, comprenant une base (8) sur laquelle ledit dôme est positionné, où ladite base (8) est prévue avec au moins une cavité (9) pour contenir partiellement un fruit à coque (N, N', N") à casser.

3. Dispositif selon la revendication 1, où le ressort hélicoïdal cylindrique (7) entoure de manière coaxiale le piston (4) et est placé entre l'extrémité du dôme 1 et le bouton (6).

4. Dispositif selon la revendication 1 où le ressort hélicoïdal cylindrique (107) adhère à l'enveloppe interne du dôme 1 et est placé entre l'extrémité de l'élément en marteau (102) et un élément de butée (16) positionné à l'ouverture du dôme (1) consistant en un anneau fendu (16) partiellement inséré dans une rainure annulaire (17) réalisée sur la paroi interne du dôme 1, à proximité de l'ouverture de celui-ci.

5. Dispositif selon la revendication 1, où l'élément en marteau (2) a une forme prismatique, de préférence une forme et des dimensions sensiblement cubiques telles qu'il est logé avec un espace radial suffisant (SV') à l'intérieur dudit dôme (1).

6. Dispositif selon la revendication 3, où l'élément en marteau (102) a une forme de disque avec un diamètre égal au diamètre interne du dôme 1.

7. Dispositif selon la revendication 1, où l'élément en marteau (202) consiste en un cylindre en acier ayant un diamètre plus petit que le diamètre interne du dôme (1) prévu dans une région intermédiaire de celui-ci avec une rainure annulaire (19) pour loger le bord interne d'un disque de centrage annulaire (20) ayant un diamètre externe égal au diamètre interne du dôme (1).

8. Dispositif selon l'une quelconque des revendications précédentes 1 à 6, où l'élément en marteau (2, 102, 202) est constitué d'acier inoxydable et a un poids significatif.

9. Dispositif selon l'une quelconque des revendications précédentes 1 à 7, où la face inférieure (102) de l'élément en marteau (2, 102, 202) est rugueuse.

10. Dispositif selon la revendication 2, où la base ou enclume (8) est constituée d'une planche en bois ou d'un autre matériau approprié, plastique compris, prévue avec au moins une cavité (9) ayant une forme et des dimensions adaptées pour loger en partie et positionner correctement debout une noix (N) et prévue avec des cavités supplémentaires (10, 11) ayant une forme et des dimensions adaptées pour loger en partie et positionner correctement une noisette (N') ou une amande (N") ou autre.
